(19) **Europäisches Patentamt**

**European Patent Office**

**Office européen des brevets**

(11) Veröffentlichungsnummer: **0 406 701 A2**

## (12) EUROPÄISCHE PATENTANMELDUNG

(21) Anmeldenummer: **90112327.3**

(22) Anmeldetag: **28.06.90**

(51) Int. Cl.⁵: **B29C 67/14**

(30) Priorität: **01.07.89 DE 3921675**

(43) Veröffentlichungstag der Anmeldung:
**09.01.91 Patentblatt 91/02**

(84) Benannte Vertragsstaaten:
**AT BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Schuermann, Helmut**
**Burgunderstrasse 13**
**D-6701 Maxdorf(DE)**

(54) Spritzgiessverfahren zur Herstellung faserverstärkter Verbundkörper.

(57) Zur Herstellung faserverstärkter Verbundkörper nach dem Spritzgießverfahren wird wenigstens ein aus Fasermaterial bestehendes Verstärkungselement in einem Formwerkzeug angeordnet und nachfolgend eine Thermoplastschmelze in das Formwerkzeug eingespritzt. Für eine bessere Haftung zwischen dem Verstärkungselement und dem unverstärkten Spritzgußteil wird das Fasermaterial mit flüssigen Vorprodukten bzw. mit Schmelze des Thermoplasten vorbehandelt.

EP 0 406 701 A2

## SPRITZGIESSVERFAHREN ZUR HERSTELLUNG FASERVERSTÄRKTER VERBUNDKÖRPER

Die Erfindung betrifft ein Spritzgießverfahren zur Herstellung faserverstärkter Verbundkörper entsprechend dem Oberbegriff des Anspruchs 1.

Ein derartiges Verfahren ist aus der DE-OS 22 03 322 bekannt. Dabei werden Einlagestücke bzw. Verstärkungselemente in Form von Geweben oder Vliesen aus Glas oder mit Öffnungen versehene flache Körper in einer Spritzgußform angeordnet und schäumfähige Thermoplastschmelze in die Form eingespritzt. Auf diese Weise lassen sich jedoch nur Verbundkörper mit mäßigen Festigkeitseigenschaften herstellen, da die Verstärkungselemente mit Thermoplastschmelze nicht ausreichend gut getränkt werden und somit eine innige Verbindung zwischen den Einlagestücken und der Thermoplastschmelze nicht zu erreichen ist. Darüber hinaus ergeben sich in den Endprodukten Hohlräume oder Lunker, wodurch deren Festigkeit ebenfalls herabgesetzt wird.

Mit der Erfindung soll ein Spritzgießverfahren zur Herstellung faserverstärkter Verbundkörper geschaffen werden, welches die vorstehenden Nachteile vermeidet.

Zur Lösung dieser Aufgabe wird die Maßnahme nach dem Kennzeichen des Anspruchs 1 vorgeschlagen.

Erfindungsgemäß werden vorbehandelte Verstärkungselemente in einem Formwerkzeug angeordnet und nachfolgend eine Thermoplastschmelze in das Formwerkzeug eingespritzt. Für das Verfahren sind alle thermoplastische verarbeitbaren Kunststoffe geeignet, beispielsweise Olefinpolymerisate, wie Polyethylen oder Polypropylen; Styrolpolymerisate, wie Polystyrol oder Copolymere des Styrols; Chlor enthaltende Polymerisate, wie Polyvinylchlorid oder chlorierte Polyolefine; Polyamide, Polymethylmethacrylat, Polycarbonat sowie Mischungen dieser Polymerisate.

Diese Kunststoffe können die üblichen Zusatzstoffe, wie Pigmente, Farbstoffe, Antistatika, Stabilisatoren, Flammschutzmittel oder Gleitmittel enthalten.

Als Verstärkungselemente kommen Strangoder bandförmige Gebilde aus natürlichen und/oder synthetischen organischen Fasern, wie z.B. Polyamid-, Polyester-, Polyacrynitril-, Polyvinylchlorid-, Polyvinylalkohol-, Baumwoll-Handfasern und dergleichen sowie aus anorganischen Fasern, z.B. Glasfasern, Kohlenstoffasern usw. in Betracht. Unter diesen sind Glasfasern, Kohlenstoffasern, Polyesterfasern und Aramidfasern besonders bevorzugt. Die Fasern können in Form von Einzelfasern, Faserbündel, in Form von gebundenen Stapelfasern oder in Form eines Gewebes, Gewirkes oder Vlies vorliegen. Für einen besseren Zusammenhalt der Fasern sind diese üblicherweise mit Bindern auf Kunststoffbasis beschichtet. Glasfasern sind mit Schichten behandelt, die z.B. einen Haftvermittler enthalten.

Zur Herstellung der Verstärkungselemente wird das Fasermaterial in an sich bekannter Weise mit Kunststoff getränkt, indem eine Kunststoffschmelze über eine Breitschlitzdüse extrudiert und von beheizten Walzen oder Preßbändern in das Fasermaterial eingedrückt wird. Es ist auch möglich, die in gebundener Form vorliegenden faserigen Substanzen mit einer dünnflüssigen Kunststofflösung zu tränken und anschließend das Lösungsmittel zu verdampfen oder den Kunststoff im Phasenumkehrverfahren auszufällen. Der Fasergehalt eines Verstärkungselements kann in weiten Grenzen variieren und liegt im allgemeinen zwischen 40 und 60 Vol.-%.

Auf diese Weise hergestellte Verstärkungselemente sind ausreichend formstabil und gut handhabbar. Sie lassen sich leicht in einem Formwerkzeug anordnen und fixieren. Dabei ist es auch möglich, mehrere Verstärkungselemente zu einem Netzwerk miteinander zu vereinen. Dieses Netzwerk kann aber auch durch eine sogenannte Korbwicklung erhalten werden, wobei die Einzelfasern oder Faserbündel an ihren Kreuzungsstellen miteinander verschweißt werden. Beim nachfolgenden Einspritzen der Thermoplastschmelze in das Formwerkzeug umhüllt die Schmelze das Verstärkungselement vollständig und verbindet sich mit diesem dadurch, daß die Beschichtung des Verstärkungselements oberflächlich aufgeschmolzen wird.

Der besondere Vorteil des Spritzgießverfahren nach der Erfindung liegt darin, daß Verbundkörper ganz gezielt an den höchstbeanspruchten Stellen verstärkt werden können. Zwischen dem Verstärkungselement und dem unverstärkten Spritzgußteil ergibt sich eine besonders innige Verbindung. Dies rührt daher, daß die vielen Faserfilamente eine sehr große Oberfläche bilden.

Zur Erläuterung der Erfindung sind in den Zeichnungen einige Anwendungsbeispiele dargestellt. Es zeigt

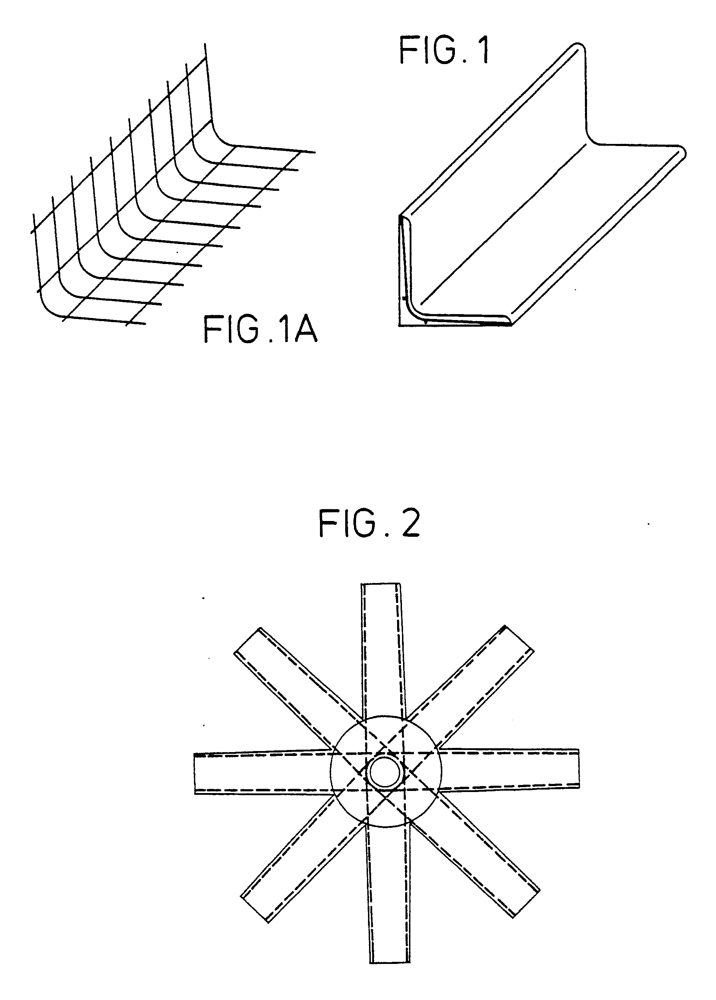

Figur 1 ein Winkelprofil mit einem Verstärkungselement in Form eines grobmaschigen Netzwerkes (Fig. 1a), um höhere Spannungen insbesondere in den Ecken ertragen zu können,

Figur 2 einen Lüfterflügel mit in radialer Richtung, d.h. in Schaufelrichtung eingelegten Verstärkungselementen,

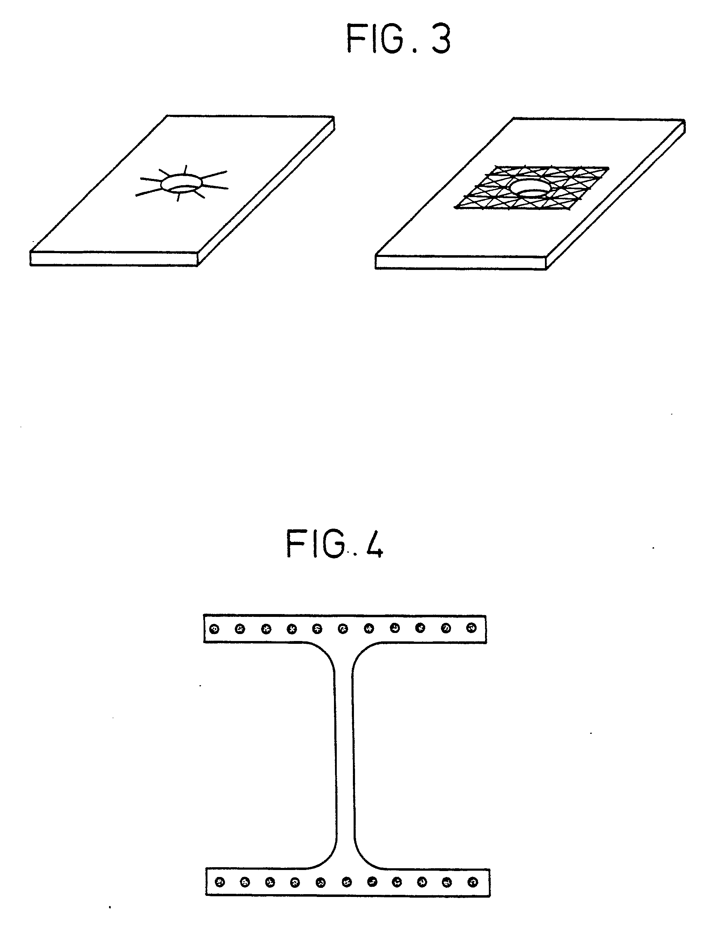

Figur 3 zwei Ausführungsformen für die Verstärkung eines Bohrlochs in einem plattenförmigen Verbundkörper und

Figur 4 ein I-Profil, in dessen Gurtbereichen Faserbündel, sogenannte Rovings eingelegt sind.

## Ansprüche

1. Spritzgießverfahren zur Herstellung faserverstärkter Verbundkörper, bei dem wenigstens ein aus Fasermaterial bestehendes Verstärkungselement in einem Formwerkzeug angeordnet und nachfolgend eine Thermoplastschmelze in das Formwerkzeug eingespritzt wird, dadurch gekennzeichnet, daß das Verstärkungselement durch Tränken des Fasermaterials mit flüssigen Vorprodukten bzw. mit Schmelze des Thermoplasten vorbehandelt wird.

2. Spritzgießverfahren nach Anspruch 1, dadurch gekennzeichnet, daß das Verstärkungselement aus Glas-, Kohlenstoff- und/oder Kunststoff-Fasern besteht.

3. Spritzgießverfahren nach den Ansprüchen 1 und 2, dadurch gekennzeichnet, daß mehrere Verstärkungselemente zu einem Netzwerk miteinander verbunden werden.

FIG. 1

FIG.1A

FIG. 2

4

# FIG. 3

# FIG. 4